# EUROPÄISCHE PATENTSCHRIFT

(11) **EP 0 711 842 B1**
(45) Veröffentlichungstag und Bekanntmachung des Hinweises auf die Patenterteilung: **11.04.2001**
(21) Anmeldenummer: 95116941.6
(22) Anmeldetag: 27.10.1995
(51) Int. Cl.: C14C 3/18, D06P 3/32

(54) **Ledergerbstoffe und Stellmittel für Farbstoffe**
Leather tanning agents and actuator for dyes
Agents de tannage de peaux et actuateur pour colorants

(30) Priorität: 09.11.1994 DE 4439990
(43) Veröffentlichungstag der Anmeldung: 15.05.1996
(73) Patentinhaber: BAYER AG, 51368 Leverkusen (DE)
(72) Erfinder: Groth, Torsten, Dr., D-51061 Köln (DE); Joentgen, Winfried, Dr., D-50769 Köln (DE); Müller, Ulrich, D-51467 Bergisch Gladbach (DE); Bömer, Bruno, Dr., D-51467 Bergisch Gladbach (DE); Träubel, Harro, Dr., D-51373 Leverkusen (DE)

(56) Entgegenhaltungen:
- DE-A- 2 253 190
- FR-A- 2 142 047

## Beschreibung

Die Erfindung betrifft die Verwendung von Polyasparaginsäure und ihren Derivaten zum Gerben und Nachgerben von Leder und als Stellmittel für Farbstoffe, vorzugsweise für Lederfarbstoffe.

Die Gerbung überführt tierische Häute unter Vernetzung des Kollagens in Leder.
Eines der wichtigsten Merkmale von Leder ist die gegenüber ungegerbten Häuten erhöhte Schrumpfungstemperatur, d.h. die verbesserte Heißwasserbeständigkeit, und das weiße Aussehen (nicht-transparent, nicht-pergamentartig) nach dem Trocknen. Unter "Nachgerbung" versteht man die Nachbehandlung von vorgegerbtem (im allgemeinen chromgegerbtem) Leder, um Farbe, Egalität, Weichheit, Fülle sowie Verhalten gegen Wasser (Hydrophobie) zu optimieren und Gerbstoffe zu fixieren.

Für die Ledergerbung, vor allem für die Nachgerbung, ist u.a. die Verwendung Carboxylgruppen-haltiger Oligoester empfohlen worden (DE-OS 2 626 430; H. Träubel und R. Goffin, "Polyurethane Retanning Materials", JALCA 80 (1985), 261-274); allerdings führt diese Art der Behandlung nicht zu einer zufriedenstellenden Fülle des Leders.

Carboxylgruppen-haltige Poly(meth)acrylate stellen einen wesentlichen Anteil der gebräuchlichen Nachgerbstoffe dar; vgl. z.B. US-PS 2 205 883, 2 205 901, DE-OS 2 755 087. Die mit diesen Polymerisaten (nach-)gegerbten Leder weisen zwar eine gute Fülle auf, lassen aber nach dem Färben noch manche Wünsche in Bezug auf Farbtiefe und Eindringtiefe des Farbstoffs offen.

Überraschenderweise wurde nun gefunden, daß Polyasparaginsäure gerbend und nachgerbend wirkt und die Nachteile des Standes der Technik überwindet: Es entstehen Leder mit guter Weichheit und Fülle, die bei der Färbung zu hohen Farbtiefen führen. Die gute Eindringtiefe der Farbstoffe ermöglichen ein Anschleifen der Leder, ohne daß es zu wesentlichen Verschiebungen der Farbnuancen kommt. Polyasparaginsäure hat weiterhin den Vorteil leichter Bioabbaubarkeit; das ist besonders wichtig, weil die Restflotten aus der Gerbung und Nachgerbung immer einer Kläranlage zugeführt werden, wo eine schlechte Abbaubarkeit sich verzögernd auf die Reinigung des Abwassers auswirkt oder sie gar unmöglich macht. Weiterhin wurde gefunden, daß die Polyasparaginsäure ungebundenen Chromgerbstoff fixiert, so daß der Gehalt der Restflotten an Chrom(III)-ionen vermindert wird.

Es besteht weiterhin ein technisches Bedürfnis, Polymergerbstoffe als Pulver einsetzen zu können, weil deren Verpackung leichter zu handhaben und zu entsorgen ist und weil sich Pulver - zumal über größere Entfernung - billiger transportieren lassen.

Weiterhin wurde gefunden, daß Polyasparaginsäure, als Stellmittel für Farbstoffe verwendet, zu Lederfärbungen verbesserter Farbtiefe führt. Dieser Effekt ist bei nachgegerbten, d.h. mit anionischen Produkten nachbehandelten, Ledern besonders ausgeprägt. Dabei treten keine Sulfat- oder Chlorid-belasteten Abwässer auf, wie das bei herkömmlichen Stellmitteln der Fall ist.

Gegenstand der Erfindung ist also die Verwendung von Polyasparaginsäure als Gerbstoff, als Nachgerbstoff oder als Stellmittel für Farbstoffe; wobei der Begriff "Polyasparaginsäure" im Sinne der Erfindung ihre Salze, vorzugsweise ihre Ammonium-, Kalium- und Natriumsalze, und ihre Anhydride, wie Polysuccinimid, mit einschließt und die Polyasparaginsäure im wesentlichen wiederkehrende Einheiten folgender Struktur:
a) 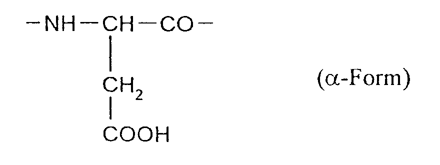 und
b) 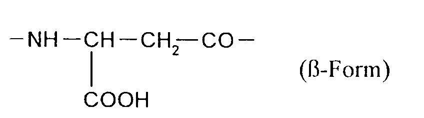 enthält.

Polysuccinimid kann während der Verwendung durch Hydrolyse Polyasparaginsäure bilden.

Die Herstellung von Polyasparaginsäure und ihrer Derivate ist seit langem Gegenstand zahlreicher Veröffentlichungen. So kann die Herstellung durch thermische Polykondensation von Asparaginsäure erfolgen (J. Org. Chem. 26, 1084 (1961)); vgl. auch DE-OS 2 253 190, US-PS 4 696 981, 5 296 578 und 5 288 783.

Die US-PS 4 839 461 (= EP-A 256 366) beschreibt die Herstellung von Polyasparaginsäure aus Maleinsäureanhydrid, Wasser und Ammoniak. Danach wird Maleinsäureanhydrid in wäßrigem Medium unter Zugabe von konzentrierter Ammoniak-Lösung in das Monoammoniumsalz umgewandelt. Dieses Maleinsäuremonoammoniumsalz kann vorzugsweise bei 150 bis 180°C in einem Reaktor bei einer Verweilzeit von 5 bis 300 Minuten einer thermischen, gegebenenfalls einer kontinuierlichen Polymerisation unterworfen und das erhaltene Polysuccinimid durch Hydrolyse zu Polyasparaginsäure bzw. einem Salz davon umgesetzt werden.

Im allgemeinen liegt der Anteil der ß-Form bei mehr als 50 %, insbesondere mehr als 70 %, bezogen auf die Summe a + b.

Zusätzlich zu den wiederkehrenden Asparaginsäureeinheiten a) und b) können weitere wiederkehrende Einheiten enthalten sein, z.B.
c) Apfelsäureeinheiten der Formel 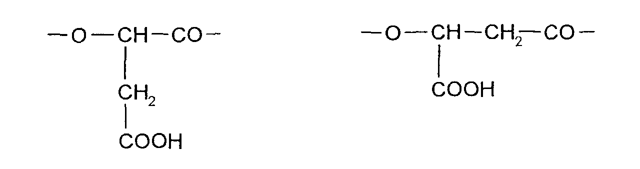
d) Maleinsäureeinheiten der Formel 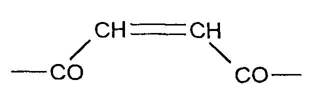
e) Fumarsäureeinheiten der Formel

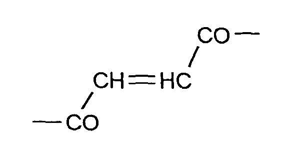

Die "weiteren" wiederkehrenden Einheiten können in Mengen bis zu 100 Gew.-%, bezogen auf die Summe a + b, in der Polyasparaginsäure enthalten sein.

Bevorzugte Polyasparaginsäuren besitzen als Gewichtsmittel durch Gelpermeationschromatographie (geeicht mit Polystyrol) bestimmte Molekulargewichte von 500 bis 10.000, vorzugsweise 1.000 bis 5.000, insbesondere 2.000 bis 4.000.

Die Polyasparaginsäure kann in Mengen von 0,1 bis 20, vorzugsweise 0,5 bis 12, insbesondere 1 bis 8 Gew.-% (bezogen auf Blößengewicht im Falle der Gerbung, auf Falzgewicht im Falle der Nachgerbung und auf Farbstoff bei der Verwendung als Stellmittel) eingesetzt werden.

Beim Gerben und Nachgerben kann die Polyasparaginsäure in Kombination mit anderen Gerbstoffen, vorzugsweise im Gewichtsverhältnis 1:9 bis 9:1, verwendet werden. Beispiele anderer Gerbstoffe sind mineralische Gerbstoffe wie Chrom- und Zirkonverbindungen, Vegetabilgerbstoffe und synthetische organische Gerbstoffe (sog. "Syntane") einschließlich der Harzgerbstoffe. Beispiele solcher anderer Gerbstoffe werden in der folgenden Literatur beschrieben: F. Schade und H. Träubel, "Neuere Entwicklungen auf dem Gebiet der synthetischen organischen Gerbstoffe", Das Leder 33 (1982), 142-154; H. Träubel und K.-H. Rogge, "Retannage and Retanning Materials", JALCA 83 (1988), 193-205; K. Faber, "Gerbmittel, Gerbung und Nachgerbung", Bd. 3 in H. Herfeld, Bibliothek des Leders, Frankfurt 1984; EP-A 118 023, 372 746, DE-OS 3 931 039.

Die Gerbstoffe und Nachgerbstoffe können mit Fettungsmitteln und Hydrophobierungsmitteln zusammen oder unmittelbar hintereinander eingesetzt werden; vgl. z.B. M. Hollstein, "Entfetten, Fetten und Hydrophobieren bei der Lederherstellung", Bd. 4 in H. Herfeld, Bibliothek des Leders, Frankfurt 1984.

Die Polyasparaginsäure wird üblicherweise unmittelbar vor der Färbung angewandt.

Die erfindungsgemäße Verwendung von Polyasparaginsäure soll am Beispiel der Nachgerbung erläutert werden:

Gefalztes chromgegerbtes Leder ("wet blue") wird in einem Faß nach kurzem Waschen neutralisiert, dabei wird ein pH-Bereich von 4,5 bis 5 erreicht. Dann läßt man diese Neutralisationsflotte ab, gibt 100 Gew.-% (bezogen auf Falzgewicht des Leders) Wasser von 30 bis 50°C zu und fügt 2 bis 5 Gew.-% Polyasparaginsäure oder ihr Derivat zu, läßt 2 Stunden laufen, färbt und fettet.

Die Prozentangaben der nachfolgenden Beispiele beziehen sich jeweils auf das Gewicht; Teile sind Gewichtsteile.

### Beispiele

In den folgenden Beispielen wird eine Polyasparaginsäure (PAS) mit einem Molekulargewicht von 3000 eingesetzt (als Na-Salz).

### Beispiel 1

150 g wet blue (Falzstärke 1,6 ± 0,3 mm) werden in einer Flasche mit 100 % (alle %-Angaben beziehen sich auf das Falzgewicht, d.h. das Gewicht des nassen chromgegerbten Leders) Wasser von 40°C, 0,2 h am Schüttelkreuz gewalkt. Dann fügt man 1 % Natriumformiat und 0,2 % Natriumbicarbonat hinzu und walkt 0,8 h; es stellt sich ein pH-Wert von 4,6 ein. Man verwirft die Flotte und spült 5 Minuten nach.

Es werden nun erneut 100 % Wasser von 40°C sowie 2,5 % PAS (als 100%ige Festsubstanz) zugefügt und 2 h am Schüttelkreuz gedreht. End-pH: 4,2.

Man läßt die Flotte ab und spült 5 Minuten mit Wasser.

Zur Färbung werden 300 % Wasser von 50°C sowie 0,5 % BAYGENAL braun CGG zugefügt, 2 h laufen lassen, sodann mit 2 % einer Fettungsmittelmischung (aus 60 Teilen ®CHROMPOL UFB-W, 30 Teilen ®CORIPOL DXA und 10 Teilen ®CORIPOL ICA; Produkte der Stockhausen GmbH, Krefeld) gefettet, kurz 1 % wäßrige Ameisensäure zugegeben, abgelassen, gespült, ausgestoßen und an der Luft trocknen lassen.

Es entstand ein gleichmäßig braun gefärbtes, volles, weiches Leder.

### Beispiel 1A

Parallel zu Beispiel 1 wurde ein Versuch durchgeführt, bei dem alles gleich war bis auf die Tatsache, daß anstelle von PAS die (Wirkstoff-)gleiche Menge eines handelsüblichen Nachgerbstoffes auf Basis Polyacrylsäure (®BAYTIGAN AR der Bayer AG, Leverkusen) zugefügt wurde.

Nach Abschluß der Nachgerbung, Färbung und Fettung wurden beide Leder (aus Beispiel 1 und 1A) vergleichend beurteilt. Das Leder aus Beispiel 1 war deutlich dunkler und schöner gefärbt. Fülle und Weichheit waren bei beiden Ledern gleich.

### Beispiele 2 bis 7

150 g wet blue werden mit 100 % Wasser, 1 % Natriumformiat und 0,1 % Natriumhydrogencarbonat in einer Schüttelflasche 2 h bei 40°C behandelt. Es stellt sich ein pH-Wert von 5,4 ein. Man läßt die Flotte ab und gibt erneut 100 % Wasser von 30°C zu.

Sodann werden folgende Versuche durchgeführt:

| Beispiel | 2 | 3 | 4 | 5 | 6 | 7 |
|---|---|---|---|---|---|---|
| % PAS | 6 | - | - | 1,5 | - | - |
| % OS | - | 2 | - | 1,5 | 2 | - |
| % Mim. | - | 2 | - | 1,5 | 2 | - |
| % R7 | - | 2 | - | 1,5 | 2 | - |
| % LevC | - | - | 3 | - | - | - |
| % AR | - | - | 3 | - | - | - |
| pH n.2h | 5,8 | 4 | 5,4 | 5,1 | 4,7 | 5 |
| % CGG | 3 | 3 | 3 | 3 | 2,5 | 3 |
| % PAS | - | - | - | - | 1 | - |
| %HCOOH | 1,5 | 1,5 | 1,5 | 1,5 | 1,5 | 1,5 |
| Rem.geg. Nr. 7 | 81 | 64 | 63 | 53 | 49 | 100 |

In dieser Serie wurde der Einfluß einer reinen PAS-Nachgerbung (Beispiel Nr. 2) gegen eine Standardnachgerbung (Beispiel 3) mit 2 % ®TANIGAN OS, 2 % Mimosa und 2 % ®RETINGAN R7 sowie eine Polymernachgerbung (Beispiel Nr. 4) mit 3 % ®LEVOTAN C und 3 % ®BAYTIGAN AR, eine gemischte PAS-Polymernachgerbung (Beispiel Nr. 5), PAS als Farbstoffadditiv in einer Standardnachgerbung nachgegerbung (Beispiel Nr. 6) und einem Nullversuch, d.h. einem nicht Leder, verglichen.

Aus der Remmissionsmessung ergibt sich, daß PAS (Nr. 2) die höchste Farbstärke ergibt und daß ein um 25 % verringertes Farbstoffangebot mit Hilfe PAS (Nr. 6) eine leicht bessere Farbausbeute ergibt.

Die Beurteilung der Leder zeigte, daß Nr. 5 voller und weicher gegenüber Nr. 3 und Nr. 2 vergleichbar in Fülle und Weichheit wie Nr. 3, aber viel tiefer gefärbt war.

### Beispiele 8 bis 13

Einsatz von PAS in der Gerbung:

200 g einer geäscherten Fresserblöße werden in 40 % 20°C warmen Wassers mit 6 % Natriumchlorid sowie 0,4 % Ameisensäure und 0,6 % Schwefelsäure gepickelt. Nach 90 Minuten stellt sich ein pH-Wert von 3,5 ein. In 6 Flaschen wurden dann folgende Versuche mit ®CHROMOSAL B (hier als B bezeichnet) in der Gerbung durchgeführt:

| Beispiel | 8 | 9 | 10 | 11 | 12 | 13 |
|---|---|---|---|---|---|---|
| %B | 4 | 4 | 4 | 6 | 6 | 4 |
| % PAS | 2 | 2 | 2 | - | 2 | - |
| nach 1 h Laufzeit % MgO | 0,8 | 0,8 | 0,8 | 0,5 | 0,5 | 0,5 |
| nach 1 h % MgO | - | - | - | 0,3 | 0,1 | 0,3 |
| pH nach | | | | | | |
| 3 h | 3,9 | 3,9 | 3,9 | 3,4 | 3,6 | 3,3 |
| 4 h | 4,1 | 4,1 | 4,1 | 3,9 | 3,9 | 4 |
| 16 h | 4,2 | 4,2 | 4,2 | 4,1 | 4,2 | 4,1 |

| Auszehrung des Chromgerbstoffs durch Messung von g/l Chromoxid | | | | | | |
|---|---|---|---|---|---|---|
| g/l | 0,14 | 0,11 | 0,12 | 1,84 | 0,63 | 0,66 |

| Neutralisation in neuer Flotte | | | | | | |
|---|---|---|---|---|---|---|
| % NaHCOO | 1 | 1 | 1 | 1 | 1 | 1 |
| pH nach 2 h | 4,6 | 4,7 | 4,6 | 4,5 | 4,6 | 4,5 |

Nachgerbung mit je 3 % ®TANIGAN OS, Mimosa, ®RETINGAN R7 (Gerbmittel auf Harzbasis der Bayer AG, Leverkusen); alle pH-Werte lagen nach 2,5 Stunden zwischen 4,2 und 4,3.

Färbung: 3 % ®BAYGENAL Schwarz SB (Acid Black 210) gefärbt und mit 1,5 % Ameisensäure abgesäuert. Die Leder wurden wie üblich fertiggestellt und die Farbstärke der trockenen Leder gegen den Versuch Nr. 11 beurteilt.

| | | | | | | |
|---|---|---|---|---|---|---|
| Farbstärke | 104 | 100 | 100 | 100 | 130 | 88 |

Alle Leder waren weicher als Versuch Nr. 11 und 13.

Man kann an dieser Versuchsserie (bei der im Versuch 9 die PAS nach 1 h und im Versuch Nr. 10 nach 2 h erfolgte) sehen, daß - gleichgültig, wann die Zugabe der PAS erfolgt - in allen Fällen die Chromgerbstoffauszehrung signifikant verbessert war. Im Vergleich der Versuche mit 4 % ®CHROMOSAL B hatte Nr. 3 (Versuch ohne PAS) eine fast 6 mal höhere Chrommenge in der Restflotte als Versuch 10. Bei den Versuchen mit 6 % ®CHROMOSAL B (Nr. 11) war die Auszehrung in Gegenwart von PAS (Nr. 12) 3 mal besser. Auffälligerweise ist die Färbeausbeute bei Nr. 12 30 % besser als bei Nr. 11. Die Farbausbeute bei den Gerbungen mit 4 % ®CHROMOSAL B lag der Versuch Nr. 13 (ohne PAS) um 12 bis 15 % weniger stark als die Versuche in Gegenwart der PAS (Nr. 8 bis 10).

### Beispiele 14 bis 15A

Zur Veranschaulichung der positiven Stellmittelwirkung für Lederfarbstoffe wurden folgende Versuche durchgeführt:

BAYGENAL braun CGG (Colour Index Acid Brown 83), das normalerweise 49,4 % Natriumsulfat enthält, wurde mit der gleichen Menge PAS versetzt.

Färbt man ein nach Eitel-Standard nachgegerbtes (3 % TANIGAN OS, 3 % Mimosa, 3 % RETINGAN R7) Leder mit 1 % Farbstoff, so wird die Färbung mit dem PAS gestellten Farbstoff (Versuch 14A) mit 120 (gegen 100 beim Sulfat gestellten Farbstoff; Versuch 14) deutlich farbstärker.

BAYGENAL grau L-NG (Acid Black 173) enthält als Stellmittel 24,1 % Natriumchlorid. Austausch des Natriumchlorids gegen PAS ergab folgende Resultate:

| Versuch Nr. | % Farbstoff | Farbstärke der Färbung |
|---|---|---|
| 15 | 1 | 100 |
| 15A | 1 | 114 |

Bei geschliffenen Velourledern wurden - in Abhängigkeit von der Nachgerbung - ebenfalls gute Ergebnisse erzielt.

## Patentansprüche

1. Verwendung von Polyasparaginsäure als Gerbstoff, als Nachgerbstoff oder als Stellmittel für Farbstoffe, wobei der Begriff Polyasparaginsäure auch ihre Salze und Anhydride einschließt und die Polyasparaginsäure im wesentlichen wiederkehrende Einheiten folgender Struktur:
a) 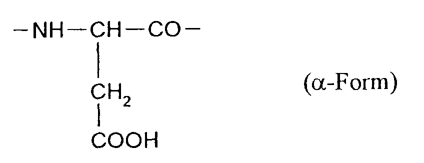 und
b) 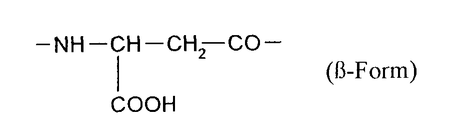
enthält.

## Claims

1. Use of polyaspartic acid as a tanning material, as a retanning material or as a standardizer for dyes, the term "polyaspartic acid" also comprehending its salts and anhydrides and said polyaspartic acid essentially containing recurring units of the following structure:
a) 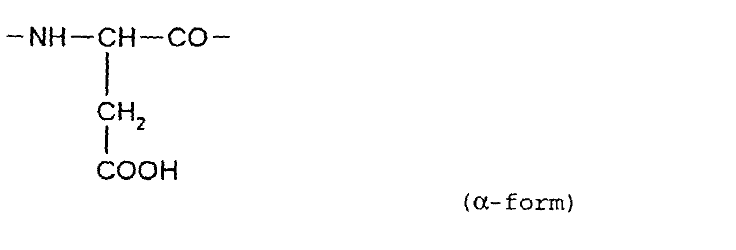 and
b)

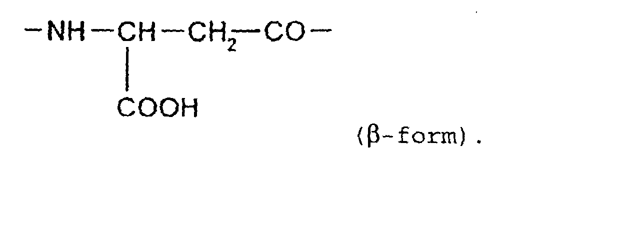

## Revendications

1. Utilisation du poly(acide aspartique) comme matière tannante, comme matière tannante de retannage ou comme agent de fixation pour colorants, où le terme poly(acide aspartique) inclut aussi ses sels et ses anhydrides et le poly(acide aspartique) contient essentiellement des unités répétées de structure suivante :
a) 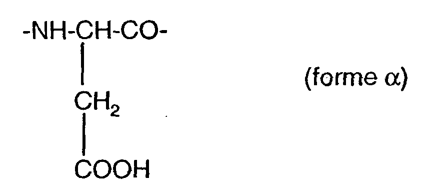 et
b)
